# FASCICULE DE BREVET EUROPEEN

(11) **EP 3 874 131 B1**
(45) Date de publication et mention de la délivrance du brevet: **30.11.2022**
(21) Numéro de dépôt: 19813377.9
(22) Date de dépôt: 21.10.2019
(51) Int. Cl.: F01D 9/04, F01D 11/00, F01D 11/08

(54) **SECTEUR D'ANNEAU DE TURBINE A LANGUETTES D'ETANCHEITE REFROIDIES**
TURBINENMANTELABSCHNITT MIT GEKÜHLTEN DICHTUNGSSTREIFEN
TURBINE SHROUD SECTOR WITH COOLED SEALING STRIPS

(30) Priorité: 29.10.2018 FR 1859983
(43) Date de publication de la demande: 08.09.2021
(73) Titulaire: SAFRAN AIRCRAFT ENGINES, 75015 Paris (FR)
(72) Inventeur: JARROSSAY, Clément, 77550 MOISSY-CRAMAYEL (FR); CONGRATEL, Sébastien, Serge, Francis, 77550 MOISSY-CRAMAYEL (FR); DANIS, Antoine, Claude, Michel, Etienne, 77550 MOISSY-CRAMAYEL (FR); DUFFAU, Clément, Jean, Pierre, 77550 MOISSY-CRAMAYEL (FR); TABLEAU, Nicolas, Paul, 77550 MOISSY-CRAMAYEL (FR); QUENNEHEN, Lucien, Henri, Jacques, 77550 MOISSY-CRAMAYEL (FR)
(74) Mandataire: Gevers & Orès
(86) Numéro de dépôt international: PCT/FR2019/052491
(87) Numéro de publication internationale: WO 2020/089540

(56) Documents cités:
- EP-A1- 1 593 813
- FR-A1- 2 919 345
- FR-A1- 3 041 993
- GB-A- 2 486 954

## Description

### 1. Domaine de l'invention

La présente invention concerne le domaine des turbomachines et notamment des turbomachines pour aéronef. Elle concerne en particulier un secteur d'anneau en matériau composite à matrice céramique d'un organe de turbomachine, tel qu'une turbine, équipé de moyens de refroidissement.

### 2. Etat de la technique

L'état de la technique comprend les documents de brevet FR-A1-3041993, FR-A1-2919345, EP-A1 -1593813 et GB-A-2486954.

Une turbine de turbomachine d'axe longitudinal X comprend un ou plusieurs étages comprenant chacun un stator et un rotor monté en aval du stator. Les étages sont disposés successivement suivant l'axe longitudinal. Le stator est formé d'une roue fixe à aubes fixes connue sous le terme de distributeur et le rotor est formé d'une roue mobile à aubes mobiles. La roue mobile est montée en rotation à l'intérieur d'un anneau de turbine centré sur l'axe longitudinal et qui est solidaire du carter. La roue mobile comprend en particulier un disque sur lequel est montée une pluralité d'aubes mobiles réparties circonférentiellement et régulièrement sur la périphérie du disque.

L'anneau est formé d'une pluralité de secteurs d'anneaux qui sont réalisés dans un matériau composite à matrice céramique (CMC). Les matériaux CMC présentent de bonnes propriétés mécaniques les rendant aptes à constituer des éléments de structures et conservent avantageusement ces propriétés à températures élevées. En effet, la contrainte majeure des turbomachines est la tenue aux températures élevées. Ainsi, les secteurs d'anneau des turbines en matériaux CMC augmentent la capacité de résistance aux températures élevées ce qui améliore le rendement global de la turbomachine. De plus, les matériaux CMC ont une masse volumique inférieure à celles des matériaux réfractaires traditionnellement utilisés.

Chaque secteur d'anneau en CMC comprend une base avec une face radialement interne et une face radialement externe qui sont opposées. Le secteur d'anneau comprend une patte d'accrochage amont et une patte d'accrochage aval qui s'étendent depuis la face radialement externe. Ces pattes d'accrochage amont et patte d'accrochage aval sont destinées à être fixées sur une structure de support d'anneau.

L'utilisation de secteurs d'anneau en CMC permet de réduire significativement la ventilation nécessaire au refroidissement de l'anneau de turbine. Toutefois, l'étanchéité entre la veine d'écoulement gazeux du côté intérieur et du côté extérieur des secteurs d'anneau demeure un problème. Afin d'améliorer l'étanchéité entre les secteurs d'anneau, ceux-ci comprennent des moyens d'étanchéité. La base comprend une première rainure et une deuxième rainure qui sont formées dans une face latérale inter-secteur et qui s'étendent suivant l'axe longitudinal. Une première et une deuxième languettes longitudinales sont respectivement logées dans la première et la deuxième rainures, la deuxième languette étant agencée radialement à l'extérieur de la première languette. Ces languettes présentent des dimensions sensiblement identiques à celles des rainures de manière à éviter les fuites. Cependant, l'étanchéité est telle que, et notamment celle réalisée par la deuxième languette, qu'une importante perte de charge est susceptible de se produire. La pression peut augmenter en partie radialement externe de la deuxième languette et atteindre 10 à 15 bars alors que la pression en partie radialement interne de la deuxième languette peut être moins élevée. Par ailleurs, le flux primaire peut remonter entre les différents secteurs d'anneau, à l'endroit des faces latérales inter-secteurs, ce qui augmente la température des secteurs d'anneau et notamment des première et deuxième languettes qui, étant réalisées dans un matériau métallique, sont plus sensibles aux températures élevées. La résistance aux températures élevées des secteurs anneaux est encore limitée par la présence de ces languettes métalliques.

### 3. Objectif de l'invention

La présente invention a notamment pour objectif de fournir une solution simple et efficace permettant de limiter une élévation en température d'un secteur d'anneau.

### 4. Exposé de l'invention

On parvient à cet objectif conformément à l'invention grâce à un secteur d'anneau de turbine en matériau composite à matrice céramique destiné à s'étendre autour d'un axe longitudinal, le secteur d'anneau comprenant une base avec une face radialement interne, une face radialement externe à partir de laquelle s'étendent une patte d'accrochage amont et une patte d'accrochage aval à une structure de support d'anneau, et au moins une face latérale inter-secteur destinée à être montée en regard d'une face latérale d'un secteur d'anneau circonférentiellement adjacent, la base comprenant en outre une première rainure et une deuxième rainure formées chacune dans la face latérale inter-secteur, s'étendant suivant l'axe longitudinal X et, une première et une deuxième languettes d'étanchéité longitudinales qui reposent chacune sur une paroi radialement interne respective de ces première et deuxième rainures, la deuxième rainure étant agencée radialement à l'extérieur de la première rainure, la première languette présentant une forme générale en oméga et le secteur présentant un premier jeu qui est défini radialement entre une partie centrale de la première languette et la paroi radialement interne de la première rainure et un deuxième jeu qui est défini radialement entre la partie centrale de la première languette et une paroi radialement externe de la première rainure, les parois radialement interne et externe étant opposées suivant un axe radial Z perpendiculaire à l'axe longitudinal X.

Ainsi, cette solution permet d'atteindre l'objectif susmentionné. En particulier, une telle configuration permet d'améliorer la circulation d'air autour des languettes et notamment autour d'au moins une partie de la première languette de manière à refroidir le secteur d'anneau. La température de la première languette sera réduite ainsi que les températures de la partie radialement intérieure de la face latérale destinée à former une interface inter-secteur de secteurs d'anneau adjacents.

Le secteur d'anneau peut comprendre une ou plusieurs des caractéristiques suivantes, prises isolément ou en combinaison les unes des autres :
- la paroi radialement interne de la première rainure comprend un ressaut amont et un ressaut aval coopérant avec la première languette, et les ressauts amont et aval étant respectivement disposés en amont et en aval de la partie centrale de la première languette, les ressauts formant des extrémités axiales d'une marche qui s'étend radialement en saillie de la paroi radialement interne de la première rainure,
- la première languette de forme générale en oméga comprend la partie centrale, et une première branche latérale et une deuxième branche latérale qui s'étendent respectivement en amont et en aval de la partie centrale, les première et deuxième branches latérales étant chacune en contact avec une extrémité axiale de la marche formée par les ressauts,
- le premier jeu et le deuxième jeu sont égaux,
- la première rainure comprend une portion centrale qui est décalée radialement vers l'extérieur par rapport à deux portions d'extrémité de la première rainure,
- la première languette présente un profil sensiblement complémentaire à celui de la première rainure, la première languette d'étanchéité comprenant une partie centrale s'étendant à égale distance des parois radialement interne et externe de la paroi périphérique d'une portion centrale de la première rainure, les parois radialement interne et externe étant opposées suivant un axe radial perpendiculaire à l'axe longitudinal,
- la portion centrale de la première rainure s'étend entre les ressauts amont et aval,
- la valeur du premier jeu et/ou du deuxième jeu est comprise entre 0.1 et 1 mm,
- la base comprend une rainure amont s'étendant sensiblement suivant un axe radial Z et débouchant dans un premier côté de la deuxième rainure, une languette d'étanchéité amont étant logée dans la rainure amont,
- la base comprend une rainure aval s'étendant sensiblement suivant l'axe radial Z et débouchant dans la première rainure, une languette d'étanchéité aval étant logée dans la rainure aval,
- la deuxième rainure comprend un deuxième côté qui est agencé à distance de la rainure aval,
- la distance suivant l'axe longitudinal entre le deuxième côté de la deuxième rainure et la rainure aval est comprise entre 0.1 et 5 mm,
- la deuxième rainure présente un deuxième côté qui débouche dans la rainure aval,
- le secteur d'anneau comprend un premier élément d'étanchéité coudé logé à la fois dans la rainure amont et dans la deuxième rainure et un deuxième élément d'étanchéité coudé logé à la fois dans la première rainure et dans la rainure aval,
- le secteur d'anneau comprend un troisième élément d'étanchéité coudé logé à la fois dans la deuxième rainure et dans la rainure aval,
- la deuxième languette est logée avec un espace entre celle-ci et une paroi périphérique de la deuxième rainure,
- les languettes d'étanchéité sont chacune réalisées dans un matériau métallique ou un alliage de matériau métallique à base de nickel, cobalt, ou tungstène ou un matériau CMC,
- chaque languette d'étanchéité présente une épaisseur comprise entre 0.1 et 1 mm,
- chaque élément d'étanchéité coudé présente une épaisseur comprise entre 0.1 et 1 mm.

L'invention concerne également un ensemble d'anneau de turbine comprenant une pluralité de secteurs d'anneau présentant l'une quelconque des caractéristiques susmentionnées, agencés circonférentiellement de manière à former un anneau de turbine et une structure de support d'anneau sur laquelle sont montés les secteurs d'anneau.

L'invention concerne également une turbomachine comprenant un ensemble d'anneau de turbine tel que susmentionné.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente schématiquement en coupe axiale et partielle, un exemple de turbomachine double flux à laquelle s'applique l'invention ;
La figure 2 est une vue partielle en perspective et en coupe radiale d'un anneau de turbine comportant plusieurs secteurs d'anneau comportant des rainures et des languettes d'étanchéité logées dans ces rainures selon l'invention ;
La figure 3 illustre en perspective et suivant une coupe radiale partielle un autre mode de réalisation d'un secteur d'anneau muni de languettes d'étanchéité dans des rainures selon l'invention ; et
La figure 4 est une vue de face d'un exemple de secteur d'anneau avec une base dans laquelle sont formées des rainures logeant chacune une languette d'étanchéité selon l'invention.

### 6. Description de modes de réalisation de l'invention

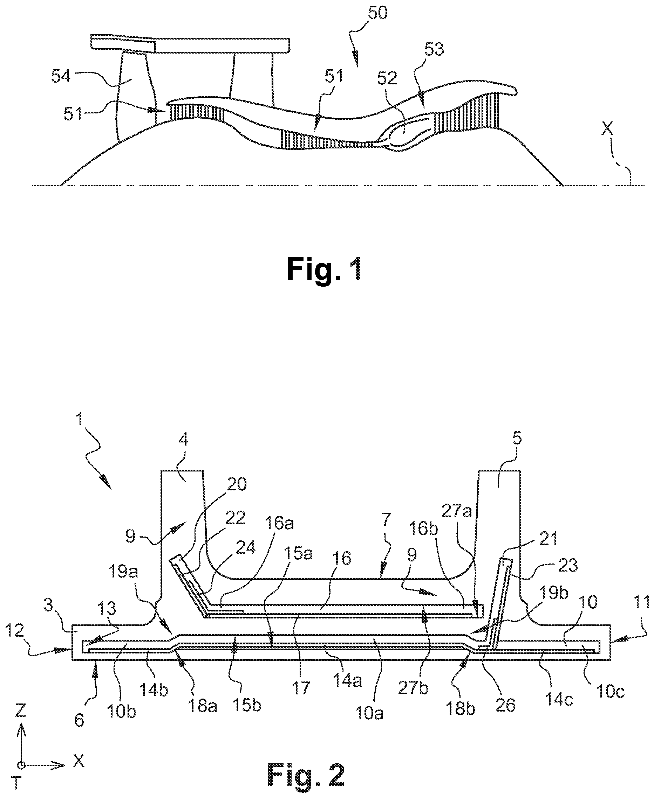

La figure 1 montre une vue en coupe axiale et partielle d'une turbomachine d'axe longitudinal X, en particulier une turbomachine 50 double flux à laquelle s'applique l'invention. Bien entendu, l'invention n'est pas limitée à ce type de turbomachine.

Cette turbomachine 50 à double flux comprend de manière générale, d'amont en aval, un ensemble de compresseur de gaz 51, une chambre de combustion 52 et un ensemble de turbine 53. Dans la présente invention, et de manière générale, les termes « amont » et « aval » sont définis par rapport à la circulation des gaz dans la turbomachine, et ici suivant l'axe longitudinal X. Une soufflante 54 est agencée en amont de l'ensemble de compresseur de manière à générer un flux primaire et un flux secondaire. Le flux primaire traverse l'ensemble de compresseur, la chambre de combustion et l'ensemble de turbine. Ce dernier comprend dans le présent exemple une turbine basse pression et une turbine haute pression.

En référence à la figure 2, la turbine, et notamment, la turbine haute pression, comprend au moins un anneau de turbine 1 qui s'étend autour d'un axe longitudinal, l'anneau de turbine 1 étant réalisé dans un matériau composite à matrice céramique (CMC). L'anneau de turbine 1 entoure une roue mobile (non représentée) de turbine, laquelle comprend un disque centré sur l'axe longitudinal et une pluralité d'aubes mobiles s'étendant radialement depuis la périphérie du disque. L'extrémité libre de chaque aube mobile est disposée en regard de l'anneau de turbine 1.

Dans la présente invention, les termes « radial », « radialement », « intérieur », « extérieur », « interne » et « externe » sont définis par rapport à un axe radial Z qui est perpendiculaire à l'axe longitudinal X.

Selon d'autres modes de réalisation, l'anneau de turbine pourrait former une plateforme radialement interne ou externe d'un distributeur comprenant des pales ou aubes fixes qui s'étendent radialement entre une plateforme radialement interne et une plateforme radialement externe, les plateformes étant destinées à délimiter un canal d'écoulement des gaz dans la turbomachine.

L'anneau de turbine 1 est formé d'une pluralité de secteurs d'anneau 2. Les secteurs d'anneau 2 sont chacun montés de manière circonférentiellement adjacente les uns par rapport aux autres autour de l'axe longitudinal X. La figure 2 est une vue en coupe radiale selon un plan passant entre deux secteurs d'anneaux contigus.

Chaque secteur d'anneau 2 a une section radiale sensiblement en forme de Pi (π) inversé. Chaque secteur d'anneau comprend une base 3 et des pattes 4, 5 radiales qui s'étendent radialement en saillie vers l'extérieur de la base 3. La base 3 comprend une face radialement interne 6 et une face radialement externe 7 opposées suivant l'axe radial Z. La face radialement interne 6 définit la face interne de l'anneau de turbine et délimite une veine d'écoulement (veine primaire) du flux primaire circulant dans la turbomachine. La face radialement interne 6 peut comprendre une couche de matériau abradable et/ou une barrière thermique destinée à coopérer avec étanchéité, par exemple, avec des léchettes aux extrémités libres des aubes mobiles. Les pattes sont précisément une patte amont 4 et une patte aval 5 qui s'étendent depuis la face radialement externe 7.

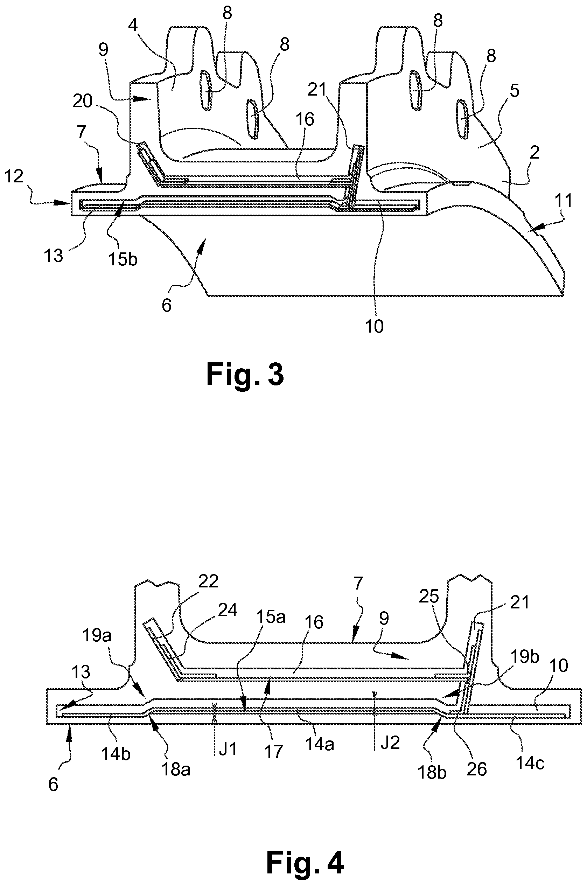

Les pattes amont et aval 4, 5 sont destinées à être fixées sur une structure de support d'anneau (non représentée) qui est solidaire d'un carter de turbine. La structure de support d'anneau comprend par exemple à cet effet une bride radiale amont annulaire et une bride radiale aval annulaire. Les pattes amont et aval 4, 5 comprennent chacune des orifices 8 traversant leurs parois de part et d'autre suivant l'axe longitudinal (cf. figure 3). Les brides radiale amont et aval comprennent chacune également un orifice traversant leurs parois de part et d'autre suivant l'axe longitudinal. Des moyens de fixation sont engagés à la fois dans la patte amont et la bride amont et à la fois dans la patte aval et la bride aval pour maintenir le secteur d'anneau sur la structure de support d'anneau. Les orifices des brides et des pattes sont alignés lors du montage des secteurs d'anneau sur la structure de support. Les moyens de fixation peuvent être des pions ou des vis. Les pattes amont et aval de chaque secteur sont montées en précontrainte entre les brides amont et aval de manière à ce que les brides exercent, au moins à « froid », c'est-à-dire à une température ambiante d'environ 20°C, mais également à toutes les températures de fonctionnement de la turbine, une contrainte sur les pattes 4, 5 et donc un serrage des secteurs d'anneau par les brides.

Chaque secteur d'anneau comprend en outre des moyens d'étanchéité agencés circonférentiellement entre les secteurs d'anneau et qui sont configurés de manière à empêcher des fuites du flux primaire à l'extérieur de la veine d'écoulement, ici veine primaire, dans la turbine. En particulier, chaque secteur d'anneau comprend des languettes d'étanchéité pour assurer leur étanchéité. Ces languettes d'étanchéité sont logées dans des rainures du secteur d'anneau. Plus précisément, la base 3 comprend une première rainure 10 s'étendant sensiblement suivant l'axe longitudinal. Cette première rainure s'étend sur presque toute la longueur de la base. La longueur de la base est déterminée entre un premier côté 11 et un deuxième côté 12 opposés suivant l'axe longitudinal X. Les premier et deuxième côtés 11, 12 respectivement aval et amont relient les faces radialement interne et externe 6, 7. La première rainure 10 est formée dans une face latérale 9 inter-secteur du secteur d'anneau et s'ouvre dans celle-ci. La face latérale 9 inter-secteur est destinée à venir en contact avec une autre face latérale inter-secteur d'un secteur d'anneau circonférentiellement adjacent. Chaque secteur d'anneau comprend deux faces latérales 9 qui sont opposées et définies chacune dans un plan radial. La première rainure 10 est disposée à proximité de la face radialement interne 6.

Une première languette d'étanchéité 14 est logée dans la première rainure 10. La première languette 14 présente une épaisseur qui est inférieure à la hauteur de la première rainure 10 (suivant l'axe radial). Cette dernière s'étend à partir d'un fond 13 axial de rainure (cf. figure 3). Ce fond 13 axial est agencé en regard de l'ouverture de la première rainure, l'ouverture débouchant dans la face latérale 9. La hauteur de la première rainure 10 est mesurée entre une paroi radialement interne 15a et une paroi radialement externe 15b de la première rainure 10. Avantageusement, la hauteur de la première rainure 10 est constante suivant toute sa longueur. En d'autres termes, lorsque la première languette est logée dans la première rainure 10, un espace ou jeu est formé entre la première languette 14 et la paroi radialement externe 15b de la première rainure 10.

La base 3 comprend également une deuxième rainure 16 s'étendant suivant l'axe longitudinal. La deuxième rainure 16 s'étend radialement à l'extérieur de la première rainure 10. Celle-ci est située au voisinage de la face radialement externe 7. Comme pour la première rainure 10, la deuxième rainure 16 est formée dans la face latérale 9 dans laquelle celle-ci s'ouvre. La deuxième rainure 16 présente une longueur (suivant l'axe longitudinal) qui est inférieure à celle de la première rainure. Une deuxième languette d'étanchéité 17 est logée dans la deuxième rainure 16. En d'autres termes, la deuxième languette 17 est située radialement à l'extérieur de la première languette 14. La deuxième rainure 16 est agencée radialement à l'extérieur vis-à-vis de la première languette 14. La deuxième languette 17 présente également une épaisseur qui est inférieure à la hauteur de la deuxième rainure (suivant l'axe radial). La hauteur de la deuxième rainure 16 est mesurée entre une paroi radialement interne 27a et une paroi radialement externe 27b de la deuxième rainure 16. Un espace ou jeu est alors formé entre la deuxième languette 17 et la paroi radialement externe 27b de la deuxième rainure 16 lorsque la deuxième languette est logée dans la deuxième rainure 16.

Sur la figure 2, au moins la paroi radialement interne 15a de la première rainure 10 comprend au moins un ressaut qui s'étend à partir de la paroi radialement interne 15a de la première rainure 10. Dans le présent exemple, la paroi radialement interne 15a et la paroi radialement externe 15b de la première rainure 10 comprennent chacune deux ressauts qui sont un ressaut amont 19a et un ressaut aval 19b. Ces derniers sont opposés suivant l'axe longitudinal et sont localisés chacun axialement au niveau d'une patte amont ou aval du secteur d'anneau. Les ressauts permettent de créer une surélévation suivant l'axe radial de la première languette 14 et aident à maintenir la première languette en position. En particulier, les ressauts 19a, 19b sont formés par une inclinaison d'une portion de paroi radialement interne et d'une portion de paroi radialement externe 15a, 15b situées en vis-à-vis par rapport à l'axe radial Z. Ceci implique que la première rainure 10 comprend une portion centrale 10a qui est décalée radialement à l'extérieur par rapport à deux portions d'extrémité axiales 10b, 10c de la première rainure 10. Les ressauts amont et aval 19a, 19b sont respectivement disposés en amont et en aval de la portion centrale 10a de la première rainure 10. Les deux portions d'extrémités axiales 10b, 10c sont situées à la même distance radiale par rapport à la face radialement interne 6. La portion d'extrémité 10b s'étend en amont du ressaut 19a et la portion d'extrémité 10c s'étend en aval du ressaut 19b. Plus précisément encore, les ressauts de la paroi radialement interne 15a forment des extrémités axiales d'une marche qui s'étend en saillie de la paroi radialement interne 15a de la première rainure 10. Les extrémité axiales s'étendent chacune respectivement en amont et en aval de la marche de la paroi radialement interne 15a.

Le décalage de hauteur entre chaque portion d'extrémité 10b, 10c axiales et la portion centrale 10a est compris entre 0.3 et 1.5 fois la hauteur de la première rainure 10 dans l'axe radial. L'angle entre la pente du ressaut et l'axe longitudinal (pour chaque ressaut amont et aval 19a, 19b) est compris entre 10° et 80°.

La première languette 14 présente un profil correspondant à celui de la première rainure 10. En particulier, la première languette 14 présente une forme générale en oméga. La première languette 14 comprend un ressaut amont 18a et un ressaut aval 18b. Les ressauts amont et aval 18a, 18b de la première languette forment une partie centrale 14a et une première et deuxième branches 14b, 14c latérales qui sont agencées de part et d'autre de la partie centrale 14a. Le ressaut amont 18a de la première languette 14 forme une surface inclinée interne qui est destinée à venir en appui contre une surface inclinée du ressaut amont 19a de la paroi radialement interne 15a de la première rainure 10. De même, le ressaut aval 18b forme une surface inclinée interne qui est destinée à venir en appui contre une surface inclinée du ressaut aval 19b de la paroi radialement interne 15a de la première rainure 10. Comme nous pouvons le voir sur la figure 2, le ressaut amont 19a de la première rainure 10 est en amont de la partie centrale 14a et le ressaut aval 19b de la première rainure 10 est en aval de la partie centrale 14a. La première branche latérale 14b de la première languette 14 est en appui contre l'extrémité axiale (en amont) de la marche et la deuxième branche latérale 14c de la première languette 14 est en appui contre l'extrémité axiale (en aval) de la marche. Les première et deuxième branches latérales s'étendent dans des plans qui sont respectivement parallèles aux extrémités axiales de la paroi radialement interne 15a.

En particulier (cf. figure 4), un espace ou jeu peut être formé radialement de part et d'autre de la partie centrale 14a de la première languette 14 entre la première rainure 10 et la première languette 14. Plus précisément encore, un premier jeu J1 est défini radialement entre la partie centrale 14a de la première languette 14 et la paroi radialement interne 15a. Un deuxième jeu J2 est également défini radialement entre la partie centrale 14a de la première languette 14 et la paroi radialement externe 15b. Les ressauts permettent également de maintenir les premier et deuxième jeux malgré les efforts de pression tendant à plaquer la première languette contre la paroi radialement interne 15a de la première rainure en fonctionnement. Avantageusement, mais non limitativement, la partie centrale 14a de la première languette 14 s'étend sensiblement au milieu de la portion centrale de la première rainure 10. Autrement dit, la partie centrale 14a s'étend à égale distance des parois interne et externe 15a, 15b de la portion centrale 10a de la première rainure 10. Le premier jeu et le deuxième jeu sont égaux. De la sorte, de l'air « frais » de refroidissement peut circuler autour de la première languette et notamment autour de la partie centrale de la première languette 14.

Avantageusement, mais non limitativement, l'espace ou jeu entre la première languette et une paroi radialement interne ou externe de la première rainure a une valeur qui est comprise entre 0.01 et 1 mm de manière à obtenir un refroidissement efficace. En effet, le jeu étant faible entre la première languette et la paroi de la première rainure 10, tout en étant non nul, la vitesse d'écoulement autour de la première languette est augmentée et les fuites sont réduites.

Le secteur d'anneau 2 comprend également une rainure amont 20 et une rainure aval 21. La rainure amont 20 s'étend principalement sensiblement suivant l'axe radial et dans la patte amont 4. Quant à la rainure aval 21, celle-ci s'étend principalement sensiblement suivant l'axe radial et dans la patte aval 5. Une extrémité radialement interne de la rainure amont débouche dans un premier côté 16a de la deuxième rainure 16. S'agissant de la rainure aval 21, une extrémité radialement interne de celle-ci débouche dans la première rainure 10.

Dans cet exemple de réalisation, la rainure aval 21 débouche en aval du ressaut 19b aval. Comme nous pouvons également le voir sur la figure 2, le deuxième côté 16b de la deuxième rainure 16 est fermé. En d'autres termes, le deuxième côté de la rainure 16b ne débouche pas dans la rainure aval 21. De la sorte, la première et la deuxième rainures ne communiquent pas entre elles. Cet agencement permet d'améliorer l'étanchéité du secteur d'anneau. Avantageusement, le deuxième côté 16b de la deuxième rainure 16 est à distance de la rainure aval 21. Cette configuration permet de faire en sorte que l'air « frais » chemine préférentiellement dans la première rainure 10 et refroidisse une zone située entre la première languette 14 et la deuxième languette 17 et notamment la première languette 14. Cela permet également de réduire la perte de charge entre les première et deuxième languettes, réduisant ainsi les risques de réintroduction d'air « très chaud » (du flux primaire) circulant dans la veine primaire.

De manière avantageuse, mais non limitativement, la distance entre le deuxième côté 16b et la rainure aval 21 suivant l'axe longitudinal est comprise entre 0.1 et 5 mm. Une telle distance permet de contrôler la quantité d'air à faire circuler entre les rainures. Bien entendu, la distance ne doit pas être trop importante afin de ne pas trop dégrader la consommation spécifique de la turbomachine (moins on « utilise » d'air frais, meilleure est la consommation).

Une languette d'étanchéité amont 22 est logée dans la rainure amont 20 et une languette d'étanchéité aval 23 est logée dans la rainure aval 21. La languette d'étanchéité aval 23 est en contact avec la première languette d'étanchéité 14 à une de ses extrémités. De la sorte, les languettes 23 et 14 sont radialement superposées ce qui permet de réduire les fuites.

La languette amont 22 présente une épaisseur qui est inférieure à la hauteur de la rainure amont 20 dans l'axe radial. De la sorte un espace ou jeu est formé entre la languette amont et la rainure amont lorsque celle-ci est installée dans la rainure amont. De même, la languette aval 23 présente une épaisseur qui est inférieure à la hauteur dans l'axe radial de la rainure aval 21 de sorte à former un espace entre eux en situation d'installation. Avantageusement, la hauteur de la rainure amont et de la rainure aval dans l'axe radial sont respectivement constantes suivant toute leurs longueurs.

L'épaisseur de chaque languette d'étanchéités 14, 17, 22, 23 est constante suivant leurs longueurs. Les languettes présentent une épaisseur qui est comprise entre 0.1 mm et 1 mm.

Comme cela est également illustré sur la figure 2, il est prévu des éléments d'étanchéité ou joints coudés destinés à venir en contact avec des languettes de manière à réduire davantage les fuites. En particulier, un premier élément d'étanchéité 24 coudé est logé à la fois dans la rainure amont 20 et dans la deuxième rainure 16. Ce premier élément d'étanchéité 24 coudé est donc à la jonction des rainures 20 et 16. Avantageusement, le premier élément d'étanchéité 24 est en contact avec la languette amont 22 et la deuxième languette 17. Le premier élément d'étanchéité 24 chevauche les languettes 22, 17.

Un deuxième élément d'étanchéité 26 coudé est agencé à la fois dans la première rainure 10 et dans la rainure aval 21. Ce deuxième élément d'étanchéité 25 est donc à la jonction des rainures 10 et 21. Avantageusement, le deuxième élément d'étanchéité 26 est en contact avec la première languette 14 et la languette aval 23. Le deuxième élément d'étanchéité 26 chevauche les languettes 14, 23.

Les languettes 14, 17, 22, 23 sont réalisées par exemple dans un matériau métallique. Celles-ci peuvent être également réalisées dans un alliage métallique à base de nickel, de cobalt ou de tungstène. Suivant encore une autre alternative, les languettes sont réalisées dans un matériau CMC.

Les languettes 14, 17, 22, 23 sont réalisées par exemple par fabrication additive ou par fabrication MIM (Moulage par Injection de Métal). Ces procédés de fabrication permettent de former rapidement et directement des languettes d'étanchéité de très faibles dimensions.

Les éléments d'étanchéité 24, 26 sont également réalisés dans un matériau métallique, ou un alliage métallique ou encore un matériau CMC. Ceux-ci peuvent être réalisés par des procédés similaires aux languettes, c'est-à-dire par fabrication additive ou par MIM. Ceux-ci présentent également une épaisseur comprise entre 0.1 et 1 mm.

Avec deux languettes d'étanchéité 14, 17, horizontales, et superposées suivant l'axe radial Z, une double étanchéité est réalisée au niveau de la base 3 de l'anneau, ce qui renforce l'étanchéité inter-secteur (entre les faces latérales 9 de deux secteurs d'anneau adjacents) dans l'anneau tout en assurant une redirection de l'air circulant du côté externe de l'anneau vers l'amont, c'est-à-dire dans la roue mobile formée par les aubes mobile à l'intérieur de l'anneau. Par ailleurs, l'utilisation des éléments d'étanchéité coudés 24, 26 permettent de boucher les fuites qui peuvent se produire au niveau des portions de contact entre les languettes d'étanchéité, c'est-à-dire au niveau des jonctions des rainures.

Les figures 3 et 4 illustrent un autre mode de réalisation d'un secteur d'anneau. Les éléments décrits précédemment sont désignés dans la suite de la description par les mêmes références numériques. Le secteur d'anneau de cet exemple diffère du mode de réalisation précédent en ce que le deuxième côté 16b de la deuxième rainure débouche dans la rainure aval 21. En d'autres termes, les rainures 10, 16, 20 et 21 communiquent entre elles. Un troisième élément d'étanchéité 25 est placé à la fois dans la deuxième rainure 16 et dans la rainure aval 21. Ce troisième élément d'étanchéité 25 coudé est donc à la jonction des rainures 16 et 21. Avantageusement, le troisième élément d'étanchéité 25 est en contact avec la deuxième languette 17 et la languette aval 23. De même que pour les éléments d'étanchéité 24 et 25, l'élément d'étanchéité 26 est partiellement introduit dans les rainures 16 et 21.

## Revendications

1. Secteur d'anneau (2) de turbine en matériau composite à matrice céramique destiné à s'étendre autour d'un axe longitudinal X, le secteur d'anneau (2) comprenant une base (3) avec une face radialement interne (6), une face radialement externe (7) à partir de laquelle s'étendent une patte d'accrochage amont (4) et une patte d'accrochage aval (5) à une structure de support d'anneau, et au moins une face latérale (9) inter-secteur destinée à être montée en regard d'une face latérale d'un secteur d'anneau circonférentiellement adjacent, la base (3) comprenant en outre une première rainure (10) et une deuxième rainure (16) formées chacune dans la face latérale (9) inter-secteur, s'étendant suivant l'axe longitudinal X et, une première et une deuxième languettes (14, 17) d'étanchéité longitudinales qui reposent chacune sur une paroi radialement interne (15a) respective de ces première et deuxième rainures (10, 16), la deuxième rainure (16) étant agencée radialement à l'extérieur de la première rainure (10),
**caractérisé en ce que** la première languette (14) présente une forme générale en oméga et **en ce que** le secteur d'anneau présente un premier jeu (J1) qui est défini radialement entre une partie centrale (14a) de la première languette (14) et la paroi radialement interne (15a) de la première rainure (10) et un deuxième jeu (J2) qui est défini radialement entre la partie centrale (14a) de la première languette (14) et une paroi radialement externe (15b) de la première rainure (10), les parois radialement interne et externe (15a, 15b) étant opposées suivant un axe radial Z perpendiculaire à l'axe longitudinal X.

2. Secteur d'anneau (1) selon la revendication précédente, **caractérisé en ce que** la paroi radialement interne (15a) de la première rainure (10) comprend un ressaut amont (19a) et un ressaut aval (19b) coopérant avec la première languette (14) et les ressauts amont et aval (19a, 19b) étant respectivement disposés en amont et en aval de la partie centrale (14a) de la première languette (14), les ressauts formant des extrémités axiales d'une marche qui s'étend radialement en saillie de la paroi radialement interne (15a) de la première rainure (10).

3. Secteur d'anneau (1) selon la revendication précédente, **caractérisé en ce que** la première languette de forme générale en oméga comprend la partie centrale (14a), et une première branche (14b) latérale et une deuxième branche (14c) latérale qui s'étendent respectivement en amont et en aval de la partie centrale (14a), les première et deuxième branches (14a, 14b) latérales étant chacune en contact avec une extrémité axiale de la marche formée par les ressauts.

4. Secteur d'anneau selon l'une quelconque des revendications précédentes, **caractérisé en ce que** le premier jeu (J1) et le deuxième jeu (J2) sont égaux.

5. Secteur d'anneau (2) selon l'une quelconque des revendications précédentes, **caractérisé en ce que** la valeur du premier jeu (J1) et/ou du deuxième jeu (J2) est comprise entre 0.1 et 1 mm.

6. Secteur d'anneau (2) selon l'une quelconque des revendications précédentes, **caractérisé en ce que** la base (3) comprend :
- une rainure amont (20) s'étendant sensiblement suivant l'axe radial Z et débouchant dans un premier côté (16a) de la deuxième rainure (16), une languette d'étanchéité amont (22) étant logée dans la rainure amont (20), et
- une rainure aval (21) s'étendant sensiblement suivant l'axe radial Z et débouchant dans la première rainure (10), une languette d'étanchéité aval (23) étant logée dans la rainure aval (21).

7. Secteur d'anneau (2) selon la revendication précédente, **caractérisé en ce que** la deuxième rainure (16) comprend un deuxième côté (16b) qui est agencé à distance de la rainure aval (21).

8. Secteur d'anneau (2) selon la revendication précédente, **caractérisé en ce que** la distance suivant l'axe longitudinal entre le deuxième côté (16b) de la deuxième rainure (16) et la rainure aval (21) est comprise entre 0.1 et 5 mm.

9. Secteur d'anneau (2) selon la revendication 6, **caractérisé en ce que** la deuxième rainure (16) présente un deuxième côté (16b) qui débouche dans la rainure aval (21).

10. Secteur d'anneau (2) selon l'une quelconque des revendications 6 à 9, **caractérisé en ce qu'**il comprend un premier élément d'étanchéité coudé (24) logé à la fois dans la rainure amont (20) et dans la deuxième rainure (16) et un deuxième élément d'étanchéité coudé (26) logé à la fois dans la première rainure (10) et dans la rainure aval (21).

11. Secteur d'anneau (2) selon la revendication 8, **caractérisé en ce qu'**il comprend un troisième élément d'étanchéité coudé (25) logé à la fois dans la deuxième rainure (16) et dans la rainure aval (21).

12. Ensemble d'anneau de turbine comprenant une pluralité de secteurs d'anneau (2) selon l'une quelconque des revendications précédentes agencés circonférentiellement de manière à former un anneau de turbine (1) et une structure de support d'anneau sur laquelle sont montés les secteurs d'anneau (2).

## Patentansprüche

1. Turbinenringsektor (2) aus Verbundmaterial mit keramischer Matrix, der dazu vorgesehen ist, sich um eine Längsachse X zu erstrecken, wobei der Ringsektor (2) eine Basis (3) mit einer radial inneren Fläche (6), einer radial äußeren Fläche (7), von der sich eine vorgelagerte Befestigungslasche (4) und eine nachgelagerte Befestigungslasche (5) mit einer Ringstützstruktur erstrecken, und mindestens eine intersektorielle seitliche Fläche (9) umfasst, die dazu vorgesehen ist, einer seitlichen Fläche eines umfänglich angrenzenden Ringsektors zugewandt montiert zu sein, wobei die Basis (3) weiter eine erste Nut (10) und eine zweite Nut (16) umfasst, die jeweils in der intersektoriellen seitlichen Fläche (9) gebildet sind und sich entlang der Längsachse X erstrecken, und einen ersten und einen zweiten längsgestreckten Dichtungsstreifen (14, 17), die jeweils auf einer entsprechenden radial inneren Wand (15a) dieser ersten und zweiten Nut (10, 16) aufliegen, wobei die zweite Nut (16) radial außerhalb der ersten Nut (10) eingerichtet ist,
**dadurch gekennzeichnet, dass** der erste Streifen (14) eine allgemeine omegaförmige Form aufweist und dadurch, dass der Ringsektor ein erstes Spiel (J1), das radial zwischen einem mittleren Teil (14a) des ersten Streifens (14) und der radial inneren Wand (15a) der ersten Nut (10) definiert ist, und ein zweites Spiel (J2), das radial zwischen dem mittleren Teil (14a) des ersten Streifens (14) und einer radial äußeren Wand (15b) der ersten Nut (10) definiert ist, aufweist, wobei die radial innere und äußere Wand (15a, 15b) entlang einer radialen Achse Z senkrecht zur Längsachse X gegenüberliegend sind.

2. Ringsektor (1) nach dem vorstehenden Anspruch, **dadurch gekennzeichnet, dass** die radial innere Wand (15a) der erste Nut (10) einen vorgelagerten Vorsprung (19a) und einen nachgelagerten Vorsprung (19b) umfasst, die mit dem ersten Streifen (14) und dem vorgelagerten und nachgelagerten Vorsprung (19a, 19b), die dem mittleren Teil (14a) des ersten Streifens (14) vorgelagert bzw. nachgelagert angeordnet sind, zusammenwirken, wobei die Vorsprünge axiale Enden einer Stufe bilden, die sich radial von der radial inneren Wand (15a) der ersten Nut (10) vorspringend erstrecken.

3. Ringsektor (1) nach dem vorstehenden Anspruch, **dadurch gekennzeichnet, dass** der erste allgemein omegaförmige Streifen den mittleren Teil (14a) und eine erste seitliche Verzweigung (14b) und eine zweite seitliche Verzweigung (14c) umfasst, die sich dem mittleren Teil (14a) vorgelagert bzw. nachgelagert erstrecken, wobei die erste und zweite seitliche Verzweigung (14a, 14b) jeweils ein axiales Ende der durch die Vorsprünge gebildeten Stufe berühren.

4. Ringsektor nach einem der vorstehenden Ansprüche, **dadurch gekennzeichnet, dass** das erste Spiel (J1) und das zweite Spiel (J2) gleich sind.

5. Ringsektor (2) nach einem der vorstehenden Ansprüche, **dadurch gekennzeichnet, dass** der Wert des ersten Spiels (J1) und/oder des zweiten Spiels (J2) zwischen 0,1 und 1 mm beträgt.

6. Ringsektor (2) nach einem der vorstehenden Ansprüche, **dadurch gekennzeichnet, dass** die Basis (3) Folgendes umfasst:
- eine vorgelagerte Nut (20), die sich im Wesentlichen entlang der radialen Achse Z erstreckt und in eine erste Seite (16a) der zweiten Nut (16) mündet, einen vorgelagerten Dichtungsstreifen (22), der in der vorgelagerten Nut (20) aufgenommen ist, und
- eine nachgelagerte Nut (21), die sich im Wesentlichen entlang der radialen Achse Z erstreckt und in die erste Nut (10) mündet, einen nachgelagerten Dichtungsstreifen (23), der in der nachgelagerten Nut (21) aufgenommen ist.

7. Ringsektor (2) nach dem vorstehenden Anspruch, **dadurch gekennzeichnet, dass** die zweite Nut (16) eine zweite Seite (16b) umfasst, die von der nachgelagerten Nut (21) beabstandet eingerichtet ist.

8. Ringsektor (2) nach dem vorstehenden Anspruch, **dadurch gekennzeichnet, dass** der Abstand entlang der Längsachse zwischen der zweiten Seite (16b) der zweiten Nut (16) und der nachgelagerten Nut (21) zwischen 0,1 und 5 mm beträgt.

9. Ringsektor (2) nach Anspruch 6, **dadurch gekennzeichnet, dass** die zweite Nut (16) eine zweite Seite (16b) aufweist, die in die nachgelagerte Nut (21) mündet.

10. Ringsektor (2) nach einem der Ansprüche 6 bis 9, **dadurch gekennzeichnet, dass** er ein erstes gebogenes Dichtungselement (24), das zugleich in der vorgelagerten Nut (20) und in der zweiten Nut (16) aufgenommen ist, und ein zweites gebogenes Dichtungselement (26), das zugleich in der ersten Nut (10) und in der nachgelagerten Nut (21) aufgenommen ist, umfasst.

11. Ringsektor (2) nach Anspruch 8, **dadurch gekennzeichnet, dass** er ein drittes gebogenes Dichtungselement (25) umfasst, das zugleich in der zweiten Nut (16) und in der nachgelagerten Nut (21) aufgenommen ist.

12. Turbinenringanordnung, umfassend eine Vielzahl von Ringsektoren (2) nach einem der vorstehenden Ansprüche, die umfänglich eingerichtet sind, sodass sie einen Turbinenring (1) und eine Ringstützenstruktur bilden, auf der die Ringsektoren (2) montiert sind.

## Claims

1. A turbine shroud sector (2) made of ceramic matrix composite intended to extend about a longitudinal axis X, the shroud sector (2) comprising a base (3) with a radially internal face (6), a radially external face (7) from which there extend an upstream tab (4) and a downstream tab (5) for attachment to a shroud support structure, and at least one inter-sector lateral face (9) intended to be mounted opposite a lateral face of a circumferentially adjacent shroud sector, the base (3) further comprising a first groove (10) and a second groove (16) each formed in the inter-sector lateral face (9), extending along the longitudinal axis X and, a first and a second longitudinal sealing strips (14, 17) which each rest on a respective radially internal wall (15a) of these first and second grooves (10, 16), the second groove (16) being arranged radially outside the first groove (10),
**characterised in that** the first strip (14) has an overall shape of an omega and **in that** the shroud sector has a first clearance (J1) which is defined radially between a central part (14a) of the first strip (14) and the radially internal wall (15a) of the first groove (10) and a second clearance (J2) which is defined radially between the central part (14a) of the first strip (14) and a radially external wall (15b) of the first groove (10), the radially internal and external walls (15a, 15b) being opposite along a radial axis Z perpendicular to the longitudinal axis X.

2. The shroud sector (1) according to the preceding claim, **characterised in that** the radially internal wall (15a) of the first groove (10) comprises an upstream step (19a) and a downstream step (19b) cooperating with the first strip (14) and the upstream and downstream steps (19a, 19b) being respectively arranged upstream and downstream of the central part (14a) of the first strip (14), the steps forming axial ends of a step which extends radially outwards from the radially internal wall (15a) of the first groove (10).

3. The shroud sector (1) according to the preceding claim, **characterised in that** the first strip of overall shape of an omega comprises the central part (14a), and a first lateral branch (14b) and a second lateral branch (14c) which extend respectively upstream and downstream of the central part (14a), the first and second lateral branches (14a, 14b) each being in contact with an axial end of the step formed by the steps.

4. The shroud sector according to any of the preceding claims, **characterised in that** the first clearance (J1) and the second clearance (J2) are equal.

5. The shroud sector (2) according to any of the preceding claims, **characterised in that** the value of the first clearance (J1) and/or the second clearance (J2) is between 0.1 and 1 mm.

6. The shroud sector (2) according to any of the preceding claims, **characterised in that** the base (3) comprises:
- an upstream groove (20) extending substantially along the radial axis Z and opening into a first side (16a) of the second groove (16), an upstream sealing strip (22) being housed in the upstream groove (20), and
- a downstream groove (21) extending substantially along the radial axis Z and opening into the first groove (10), a downstream sealing strip (23) being housed in the downstream groove (21).

7. The shroud sector (2) according to the preceding claim, **characterised in that** the second groove (16) comprises a second side (16b) which is arranged at a distance from the downstream groove (21).

8. The shroud sector (2) according to the preceding claim, **characterized in that** the distance along the longitudinal axis between the second side (16b) of the second groove (16) and the downstream groove (21) is between 0.1 and 5 mm.

9. The shroud sector (2) according to claim 6, **characterised in that** the second groove (16) has a second side (16b) which opens into the downstream groove (21).

10. The shroud sector (2) according to any one of claims 6 to 9, **characterised in that** it comprises a first angled sealing element (24) housed in both the upstream groove (20) and the second groove (16) and a second angled sealing element (26) housed in both the first groove (10) and the downstream groove (21).

11. The shroud sector (2) according to claim 8, **characterised in that** it comprises a third angled sealing element (25) housed in both the second groove (16) and the downstream groove (21).

12. A turbine shroud assembly comprising a plurality of shroud sectors (2) according to any of the preceding claims arranged circumferentially so as to form a turbine shroud (1) and a shroud support structure on which the shroud sectors (2) are mounted.
